# EUROPÄISCHE PATENTANMELDUNG

(11) **EP 0 571 759 A2**
(43) Veröffentlichungstag der Anmeldung: **01.12.1993**
(21) Anmeldenummer: 93106454.7
(22) Anmeldetag: 21.04.1993
(51) Int. Cl.: H02P 8/00

(54) **Kontrollierte Mikroschrittsteuerung für einen Schrittmotor**

(30) Priorität: 27.05.1992 DE 4217557
(71) Anmelder: ROBERT BOSCH GMBH, 70442 Stuttgart (DE)
(72) Erfinder: Dietz, Günter, W-8806 Neuendettelsau (DE)

(57) **Zusammenfassung**

Es wird vorgeschlagen, bei einer Mikroschrittsteuerung für einen PM-Motor den einzelnen Mikroschritt mittels einer separaten Vorrichtung zu erfassen. Anhand der erfaßten Mikroschritte wird einem Speicher der zugeordnete Steuerstrom für den Schrittmotor entnommen. Die Erfassung der Mikroschritte erfolgt mittels einer Lichtschranke oder einem Magnetsensor.Die Steuerung ist für einen Schrittmotor in einem Anzeigegerät verwendbar.

## Beschreibung

### Stand der Technik

Die Erfindung geht aus von einer Mikroschrittsteuerung für einen Schrittmotor, insbesondere für einen Permanentmagnet-Schrittmotor nach der Gattung des Hauptanspruchs. Es ist schon bekannt, die Drehbewegung eines Schrittmotors durch eine Vielzahl von Mikroschritten zu erzeugen. Dabei werden die Mikroschritte mit einzelnen Stromimpulsen erzeugt, deren Anzahl und Amplitude derart ausgebildet ist, daß der Schrittmotor eine quasi sinusförmige Ansteuerkurve im arithmetischen Mittel erhält. Eine derartige Ansteuerschaltung ist beispielsweise durch die integrierte Schaltung TA8435H der Firma Toshiba bekannt. Es hat sich aber gezeigt, daß die Gleichförmigkeit der Drehbewegung eines derart gesteuerten Schrittmotors nicht befriedigend ist. Innerhalb eines Vollschrittes treten periodisch schwankende Winkelgeschwindigkeiten auf. Damit ist aber ein genauer Zusammenhang zwischen einer vorgegebenen Sollposition für den Rotor des Schrittmotors und der tatsächlichen Rotorposition nicht mehr gegeben. Die genaue Einhaltung einer Sollposition ist aber in vielen Fällen, insbesondere wenn der Schrittmotor für einen Zeigerantrieb in einem Anzeigeinstrument verwendet wird, erwünscht.

### Vorteile der Erfindung

Die erfindungsgemäße Mikroschrittsteuerung hat demgegenüber den Vorteil, daß die einzelnen Mikroschritte des Schrittmotors erfaßt bzw. gezählt werden und damit die augenblickliche Istposition der Motorwelle der Steuerung bekannt ist. Folgt der Rotor des Schrittmotors nicht der vorgegebenen Sollposition, dann ist auf einfache Weise eine entsprechende Korrektur möglich. Ein weiterer Vorteil ist, daß durch die Kontrolle der Istposition des Schrittmotors der Rundlauf verbessert wird, so daß insbesondere bei der Verwendung des Schrittmotors für die Anzeige in einer Instrumententafel keine störenden ruckartigen Bewegungen auftreten.

Durch die in den abhängigen Ansprüchen aufgeführten Maßnahmen sind vorteilhafte Weiterbildungen und Verbesserungen der im Hauptanspruch angegebenen Mikroschrittsteuerung möglich. Besonders vorteilhaft ist, daß die Erfassung der Mikroschritte berührungslos erfolgt. Schrittmotoren geben wegen ihrer kleinen Bauform ein relativ kleines Drehmoment ab. Eine unnötige Belastung durch Reibung wird vermieden.

Günstige Bedingungen ergeben sich bei Verwendung einer Lichtschranke, die auch als Reflexlichtschranke ausgebildet sein kann. Lichtschranken sind klein und gegen elektrische Signale störunempfindlich, so daß die Mikroschritte des Schrittmotors zuverlässig erfaßt werden.

Da die von der Lichtschranke abgegebenen Signale üblicherweise direkt von einem Mikrocomputer verarbeitbar sind, sind komplizierte Signalanpassungen nicht erforderlich.

Vorteilhaft ist auch eine elektromagnetische Abtastung der Strichscheibe mit einem Magnetsensor, da dessen Signal unempfindlich ist gegen Verschmutzung oder dergleichen. Weiterhin ergibt sich für die Auswerteschaltung in vorteilhafter Weise durch Verwendung eines Impulszählers eine einfache Erfassung der Mikroschritte. Da die Signale in digitalisiserter Form vorliegen, lassen sie sich leicht mit digital gespeicherten Daten vergleichen und auswerten.

Durch die Erfassung der tatsächlichen Istposition des Motorankers für einen zugeordneten Steuerstrom ergibt sich vorteilhaft die Möglichkeit, einen Schrittmotor auch ohne Strichscheibe zu betreiben. Darüberhinaus kann der Schrittmotor sehr einfach und damit preiswert aufgebaut sein. Er arbeitet dennoch sehr präzise, da für jeden Drehwinkel des Ankers der erforderliche Steuerstrom bekannt ist.

Die erfindungsgemäße Einrichtung ist bevorzugt für Meßgeräte verwendbar, die einen analogen Meßwert anzeigen sollen. Derartige Meßgeräte wurden bisher mit Asynchronmotoren angetrieben, die in der Regel eine relativ große Bauform haben. Durch Verwendung eines Schrittmotors läßt sich die Bauform des Anzeigegerätes erheblich verkleinern.

Weitere Vorteile und Verbesserungen der Erfindung sind der Beschreibung entnehmbar.

### Zeichnung

Ein Ausführungsbeispiel der Erfindung ist in der Zeichnung dargestellt und in der nachfolgenden Beschreibung näher erläutert. Es zeigen Figur 1 einen Schrittmotor mit der Vorrichtung für die Mikroschritterfassung, Figur 2 ein Blockschaltbild für die Signalauswertung, Figur 3 ein zweites Blockschaltbild für die Kurvenoptimierung und Figur 4 ein Flußdiagramm.

### Beschreibung des Ausführungsbeispiels

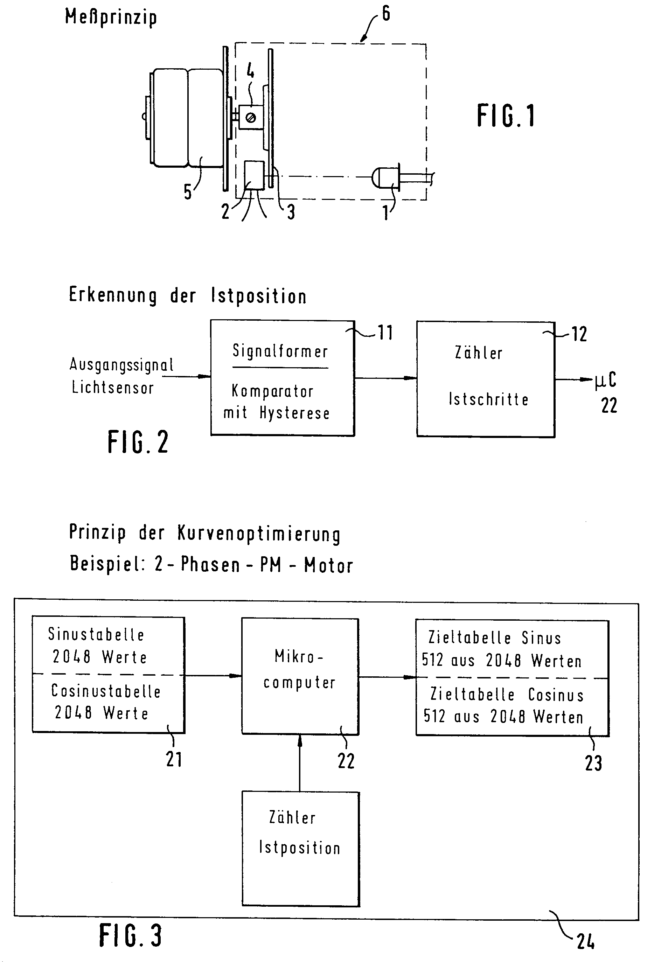

Figur 1 zeigt schematisch einen Schrittmotor 5, der vorzugsweise als Permanentmagnet-Schrittmotor (PM-Schrittmotor) mit zwei Erregerspulenpaaren ausgebildet ist. Der Rotor des Schrittmotors 5 dreht sich bei einem Vollschritt um 15°, wobei ein Vollschritt mit 128 Mikroschritten betrieben werden soll. Die die Mikroschritte auslösenden Stromimpulse sollen einen sinusförmigen (am zweiten Spulenpaar einen kosinusförmigen) Verlauf haben. Für eine Sinusperiode werden vier Vollschritte benötigt, d.h. der Motor dreht sich um 60°. Jeweils sechs Sinusperioden ergeben eine Drehung der Welle des Motors um 360°. Zur Erfassung dieser insgesamt 3072 Mikroschritte ist eine entsprechende Strichscheibe 3 über ein Kupplungsstück 4 auf der Welle des Schrittmotors 5 befestigt. Die Strichscheibe 3 weist entsprechend der Mikroschrittzahl Striche oder lichtdurchlässige Schlitze auf, die von der parallel zur Drehachse des Motors angeordneten Lichtschranke 1, 2 erfaßt werde. Bei jedem Strich oder Lichtblitz gibt der Empfänger 2 über seine Anschlüsse einen Impuls an eine Auswerteschaltung 24 (Figur 3).

Die Lichtschranke kann in weiterer Ausgestaltung der Erfindung als Reflexlichtschranke oder als elektromagnetischer Sensor ausgebildet sein. Im zweiten Fall hat die Strichscheibe 3 entsprechende Vertiefungen oder Erhöhungen, die als Schrittsignal auswertbar sind.

Figur 2 zeigt Einzelheiten zur Signalauswertung der Lichtschanke 1, 2. Das Signal des Empfängers 2 wird auf einen Signalformer 11 gegeben. Der Signalformer 11 ist als Komparator mit einer Hysterese ausgebildet und formt einen Rechteckimpuls, der einem nachgeschalteten Zähler 12 zugeführt wird. Mit jedem Mikroschritt erfolgt ein Pegelwechsel, der von Zähler erfaßt wird. Durch Aufsummieren der Impulse wird der Drehwinkel des Schrittmotors ermittelt. Es ist vorteilhaft, jeden Mikroschritt zu zählen, da dadurch die größte Positioniergenauigkeit erreicht wird. Nach jeweils einer Umdrehung wird der Zähler wieder auf Null gesetzt und der Schrittzähler zählt die Winkelschritte aufs Neue.

Die verwendete Anordnung gemäß der Figur 1 läßt eine berührungslose Erfassung der Mikroschritte Zu. Reibungsverluste durch die Erfassung treten nicht auf. Dadurch ist diese Anordnung besonders vorteilhaft für Motoren mit einem geringen Drehmoment geeignet.

In Figur 3 ist eine Auswerteschaltung 24 schematisch dargestellt. Der Zähler 12 gibt die gezählten Mikroschritte als Istposition an einen Mikrocomputer 22. Der Mikrocomputer 22 ist mit einem ersten Speicher 21 verbunden, in dem Sollwerte für die Stromansteuerung des Schrittmotors 5 vorgegeben sind. Die Sollwerte sind in einer Tabelle abgespeichert und enthalten für das erste Spulenpaar 2048 Werte für eine Sinusperiode und 2048 Werte für die entsprechende Cosinusperiode des zweiten Spulenpaares. Diese gespeicherten Tabellen enthalten die optimalen Werte für die Ansteuerkurven des Schrittmotors. Entsprechend der im Mikrocomputer 22 eingegebenen Schrittzahl als Istwert werden die entsprechenden Zeiger der Sinustabelle bzw. Cosinustabelle aufgesucht und die Stromwerte für den Ansteuerstrom des Schrittmotors ausgelesen. In einem zweiten Speicher 23 sind beispielsweise jeweils 512 Zielwerte für die Sinus- bzw. Cosinusfunktion gespeichert, die aus den 2048 Werten des ersten Speichers gebildet sind. Diese Werte werden so gebildet, daß die beiden Ansteuerkurven für die Spulenpaare niemals gleichzeitig verändert werden.

Andererseits ist die Anzahl der Werte auf die Auflösung der verwendeten Hardware zur Erzeugung der Ansteuerströme für die Mikroschritte abgestimmt.

Die im zweiten Speicher 23 enthaltenen Zielwerte stellen nun die Sinus- bzw. Cosinuswerte dar, die für einen bestimmten Motortyp für einen guten Rundlauf besonders geeignet sind. In weiterer Ausgestaltung der Erfindung ist daher vorgesehen, die nach dem beschriebenen Verfahren ermittelten Werte des zweiten Speichers 23 zur Ansteuerung weiterer Motoren gleichen Typs zu verwenden. Eine Strichscheibe 3 mit der Zählvorrichtung 1, 2 ist dann nicht mehr erforderlich, so daß sich vorteilhaft die Auswertevorrichtung 24 entsprechend vereinfacht.

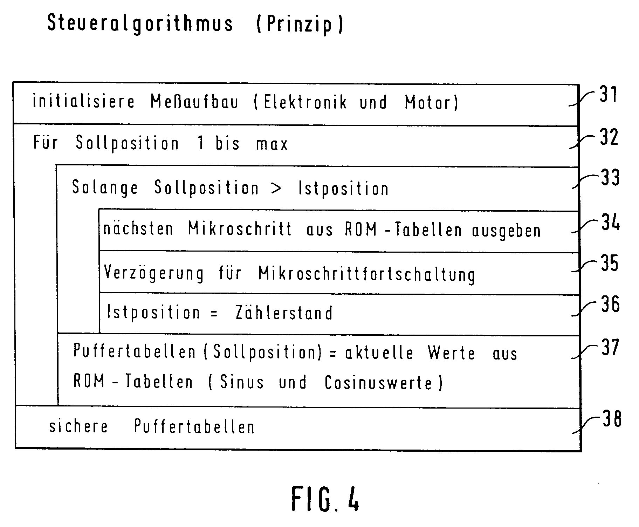

Der Steuerablauf ist im Flußdiagramm der Figur 4 dargestellt. In Position 31 dieses Flußdiagramms wird beim Einschalten des Motors die Elektronik und der Motor initialisiert. Das eigentliche Zielprogramm beginnt dann in Position 32 für die Sollpositionen von 1 bis zum Maximum. In Position 33 wird geprüft, ob die Sollposition größer ist als die Istposition. Ist das der Fall, dann wird in Position 34 der nächste Mikroschritt aus der ersten Tabelle ausgegeben. Im nächsten Schritt (Position 35) wird nach einer kurzen Wartephase geprüft, ob die Lichtschranke eine Schrittfortschaltung erkannt hat (Position 36). Ist das der Fall, so werden die Werte der entsprechenden Tabellen für die erkannten Schrittfortschaltungen in die Zieltabelle (zweiter Speicher 23) kopiert. Andernfalls wird der Zeiger weiter erhöht und das Programm fährt mit Position 34 weiter. Dieser Programmablauf läuft für alle Schrittpositionen einer Umdrehung.

Aus den so erzeugten sinusförmigen Ansteuerkurven für den Schrittmotor werden für eine Umdrehung sechs Sinusperioden benötigt. Durch die sechs vermessenen Sinusperioden ergibt sich ein guter Rundlauf des Motors. Selbstverständlich können auch mehrere Umdrehungen für die Messung des Rundlaufes verwendet werden.

Es ist vorteilhaft, den Rotor des Schrittmotors mit einem Zeiger zu versehen, der für die Anzeige eines Meßwertes beispielsweise der Geschwindigkeit eines Fahrzeuges oder der Drehzahl des Motors des Fahrzeuges oder dergleichen verwendbar ist.

## Patentansprüche

1. Mikroschrittsteuerung für einen Schrittmotor, insbesondere für einen Permanentmagnet-Schrittmotor mit einer quasi sinus- oder consinusförmigen Ansteuerkurve für die Mikroschritt-Drehbewegung des Schrittmotors, die aus einer Vielzahl getakteter Stromimpulse gebildet ist, dadurch gekennzeichnet, daß die Mikroschrittsteuerung eine Vorrichtung (6) aufweist, die jeden Mikroschritt des Schrittmotors (5) erfaßt, daß eine Auswertevorrichtung (24) ausgebildet ist, entsprechend den erfaßten Mikroschritten den Steuerstrom für den Schrittmotor einem Speicher (21) zu entnehmen und bei Erreichen einer vorgegebenen Schrittzahl des Rotors des Schrittmotors (5) die Drehbewegung abzubrechen.

2. Mikroschrittsteuerung nach Anspruch 1, dadurch gekennzeichnet, daß die Erfassung der Mikroschritte berührungslos erfolgt.

3. Mikroschrittsteuerung nach einem der vorhergehenden Ansprüche, dadurch gekennzeichnet daß die Vorrichtung (6) eine Lichtschranke oder eine Reflexlichtschranke (1, 2) ist, die die Drehbewegung einer mit der Welle des Schrittmotors (5) gekoppelten Strichscheibe (3) erfaßt.

4. Mikroschrittsteuerung nach Anspruch 3, dadurch gekennzeichnet, daß die Lichtschranke (1, 2) bei einem Mikroschritt des Rotors des Schrittmotors (5) ein elektrisches Signal an einen Mikrocomputer (22) oder an einen Zähler (12) der Auswerteschaltung (24) liefert.

5. Mikroschrittsteuerung nach Anspruch 1, dadurch gekennzeichnet, daß die Vorrichtung (6) einen Magnetsensor aufweist, der auf unterschiedliche Strukturen der Strichscheibe (3) reagiert.

6. Mikroschrittsteuerung nach einem der vorhergehenden Ansprüche, dadurch gekennzeichnet, daß die Auswerteschaltung (24) einen Zähler (12) für die Istposition des Schrittmotors (5) aufweist, daß der Mikrocomputer (22) aus einer ersten Tabelle des Speichers (21) den dem Mikroschritt zugeordneten Steuerstrom für den Schrittmotor (5) entnimmt und daß der der Istposition zugeordnete Steuerstrom für den Schrittmotor (5) in einer zweiten Tabelle eines weiteren Speichers (23) gespeichert ist.

7. Mikroschrittsteuerung nach Anspruch 6, dadurch gekennzeichnet, daß die in der ersten Tabelle des Speichers (21) gespeicherten Werte für den Strom im arithmetischen Mittel eine sinus- oder cosinusförmige Ansteuerkurve ergeben.

8. Mikroschrittsteuerung nach Anspruch 6 oder 7, dadurch gekennzeichnet, daß der der Schrittposition zugeordnete Steuerstrom der zweiten Tabelle des weiteren Speichers (23) für einen weiteren Schrittmotor gleichen Typs verwendbar ist.

9. Mikroschrittsteuerung nach einem der vorhergehenden Ansprüche, dadurch gekennzeichnet, daß die Mikroschrittsteuerung für die Steuerung eines Schrittmotors in einem Anzeigegerät verwendbar ist.
